# EUROPÄISCHE PATENTSCHRIFT

(11) **EP 1 295 530 B1**
(45) Veröffentlichungstag und Bekanntmachung des Hinweises auf die Patenterteilung: **03.11.2004**
(21) Anmeldenummer: 02019218.3
(22) Anmeldetag: 27.08.2002
(51) Int. Cl.: A23C 19/068, A23C 19/097

(54) **Verfahren zum Herstellen von tiefgefrorenen Stücken aus Mozzarella-Frischkäse und servierfähige Stücke aus Mozzarella-Frischkäse**
Process for the preparation of deep frozen pieces of Mozarella cheese and pieces of Mozarella cheese ready-to-serve
Procédé pour la préparation de pièces de Mozarella et pièces de Mozarella prêtes à servir

(30) Priorität: 28.08.2001 DE 10141914
(43) Veröffentlichungstag der Anmeldung: 26.03.2003
(73) Patentinhaber: Spezialitäten-Käserei De Lucia GmbH, 46359 Heiden (DE)
(72) Erfinder: De Lucia Giuseppe, 46359 Heiden (DE)
(74) Vertreter: Müller-Gerbes, Margot, Dipl.-Ing.

(56) Entgegenhaltungen:
- EP-A- 0 294 018
- EP-A- 0 535 268
- US-A- 5 480 666
- BERTOLA N C ET AL: "EFFECT OF FREEZING CONDITIONS ON FUNCTIONAL PROPERTIES OF LOW MOISTURE MOZZARELLA CHEESE" JOURNAL OF DAIRY SCIENCE, AMERICAN DAIRY SCIENCE ASSOCIATION. CHAMPAIGN, ILLINOIS, US, Bd. 79, Nr. 2, 1. Februar 1996 (1996-02-01), Seiten 185-190, XP000584563 ISSN: 0022-0302
- OBERG C J ET AL: "EFFECTS OF FREEZING, THAWING, AND SHREDDING ON LOW MOISTURE, PART- SKIM MOZZARELLA CHEESE1" JOURNAL OF DAIRY SCIENCE, AMERICAN DAIRY SCIENCE ASSOCIATION. CHAMPAIGN, ILLINOIS, US, Bd. 75, Nr. 5, 1. Mai 1992 (1992-05-01), Seiten 1161-1166, XP000268673 ISSN: 0022-0302

## Beschreibung

Die Erfindung bezieht sich auf ein Verfahren zum Herstellen von tiefgefrorenen Stücken aus Mozzarella-Frischkäse, die nach dem Auftauen servierfähig sind und servierfähige Stücke aus Mozzarella-Frischkäse.

Mozzarella ist ein weißer ungereifter Frischkäse von mildem Geschmack und geschmeidiger weicher fadenziehender elastischer Struktur.

Für die Herstellung von Mozzarella aus Wasserbüffelmilch oder Kuhmilch wird in bekannter Weise die verwendete Vollmilch zunächst auf etwa 35°C erwärmt und dann wird das Lab, vorzugsweise Kälbermagen und/oder mikrobielles Lab beigegeben. Dadurch gerinnt die Milch und dickt ein, es entsteht der sogenannte Käsebruch. Die Zugabe von Zitronensäure beschleunigt diesen Prozeß und wird deshalb auch manchmal praktiziert. Es wandeln die Milchsäurebakterien den in der Milch enthaltenen Milchzucker zum Teil in Milchsäure um, diese bindet die Gerüstsubstanz der Milcheiweißstoffe, das Calzium, an sich, so daß das Gerüst zusammenbricht und das Milcheiweiß (Kasein) sich als dickflüssige Masse in der dünnflüssigen Molke absetzt. In dem ausgefällten Kasein ist noch ein großer Anteil Molke eingeschlossen. Durch Abtrennen der Molke und Schneiden des Kaseins erhält man den sogenannten Käsebruch. Durch Aufschmelzen, Kneten und Ziehen (italienisch: "mozzare") wird aus dem Käsebruch eine fadenziehende elastische Masse in Form eines Kaseteiges, nämlich die Mozzarella, ein weicher Frischkäse erhalten, der ohne weitere Reifezeit als Frischkäse sofort servierfähig ist und in den Handel kommt. Damit er nicht austrocknet und verdirbt, wird er in Salzwasser eingelegt. Frische Mozzarella ist auch in Salzwasser eingelegt nur wenige Tage frisch, mit weicher Konsistenz und mit bestem Geschmack aufzubewahren, mit längerer Lagerzeit vollzieht sich ein Migrationsprozeß in beiden Richtungen aus dem Salzwasser in die Mozzarella und umgekehrt, wodurch die Mozzarella an Frische und Geschmack verliert und trocken und härter wird.

Da Mozzarella aus natürlichen Zutaten hergestellt wird, ist sie frei von Konservierungsstoffen. Sie ist daher nur begrenzt haltbar. Am besten schmeckt tagesfrisch hergestellte Mozzarella.

Die Dauer des Prozesses zur Aufschließung der Milch mittels der Milchsäurebakterien bestimmt den sogenannten Reifegrad und Geschmack eines frischen Mozzarella-Weichkäses. Je weiter der Aufschließungs- und Umwandlungsprozeß des Käseteiges fortgeschritten ist, wodurch die Mozzarella eine Geschmacksveredelung erhält, bevor die Mozzarella für den Verzehr portioniert und verpackt wird, desto kürzer ist die Aufbrauchfrist für die Mozzarella, d.h. desto kürzer ist die Lagerfrist zum Erhalt der Frische, der Weichheit und des Geschmacks der Mozzarella.

Aus der EP 0535268 B1 ist bereits ein Verfahren zum Haltbarmachen von Mozzarella bekannt geworden, bei dem ein Mozzarella in kaltem salzhaltigen Wasser abgekühlt wird und der abgekühlte Käse innerhalb von 48 Stunden nach dem Entfernen aus dem Salzwasser bei Temperaturen um -4°C eingefroren wird, wobei ein salzhaltiger Mozzarella erhalten wird. Zusätzlich wird dem Käsebruch zur Haltbarmachung noch Natriumchlorid beigegeben. Um kleinere Käsestückchen zu erhalten, wird der in kaltem Salzwasser abgekühlte Käsebruch nach der Entfernung aus dem Salzwasser verkleinert und anschließend bei Temperaturen wenig unterhalb des Gefrierpunktes eingefroren. Die so erhaltenen gefrorenen Teilchen von Mozzarella sind relativ salzhaltig und relativ trocken, wodurch der frische Geschmack vermindert ist und sie werden bevorzugt als Miniteilchen zum Aufstreuen auf Pizzen und zum Backen eingesetzt. Sie haben durch die Behandlung mit Salz und Salzwasser an Frische und Feuchtigkeit verloren und eignen sich nicht mehr zum unmittelbaren Verzehr, da ihnen die Frischequalität der Mozzarella fehlt.

Aus dem Journal of Dairy Science, American Dairy Science Association, Champain, Illinois, US (01-02-1996), 79(2), 185-190 ist es bekannt, einen Mozzarella-Käse bis zu seiner Reife herzustellen und danach zum Zwecke der Haltbarmachung bei -20°C einzufrieren. Auch bei diesem bekannten Verfahren erfolgt jedoch die Behandlung der hergestellten Käsestücke in einer Salzlake, bevor diese eingefroren werden.

Aus dem Journal of Dairy Science, American Dairy Science Association, Champain, Illinois, US (01-05-1992), 75(5), 1161-1166 ist es überdies bekannt, konventionell hergestellten frischen Mozzarella-Käse unmittelbar in flüssigem Stickstoff, d.h. bei -197°C schockzufrosten.

Der Erfindung liegt die Aufgabe zugrunde, servierfähige Stücke von Mozzarella in einer Frischequalität, wie sie unmittelbar nach Herstellung der Mozzarella vorhanden ist, in einer lagerfähigen Form zu schaffen, d.h. die Frische, den Feuchtigkeitsgehalt und die Konsistenz einer frisch hergestellten Mozzarella über einen längeren Zeitraum zu erhalten.

Diese Aufgabe wird gemäß der Erfindung mit einem Verfahren zum Herstellen von tiefgefrorenen servierfähigen Stücken aus Mozzarella-Frischkäse gelöst, das die folgenden Schritte umfaßt:
a) Milch von Kühen oder Wasserbüffeln wird pasteurisiert,
b) die pasteurisierte Milch wird auf eine Temperatur im Bereich von 35°C gebracht,
c) der warmen pasteurisierten Milch wird tierisches Lab und/oder mikrobielles Lab und/oder Kulturen von Milchsäure produzierenden Bakterien, ggf. Säuerungsmittel, wie Zitronensäure zugegeben, infolge dessen gerinnt und dickt die Milch ein und bildet ein dickflüssiges Kasein (Milcheiweißstoffe) und dünnflüssige Molke, wobei das Kasein sich in der Molke absetzt, und
d) das in der Molke abgesetzte Kasein wird durch Schneiden zu Bruchstücken zerkleinert und durch Abtrennen der Molke Käsebruch erhalten,
e) anschließend wird der erhaltene Käsebruch drainiert,
f) danach wird der drainierte Käsebruch unmittelbar einem weiteren Verkäsungsprozeß zugeführt und in salzhaltigem heißem Wasser bei bis zu etwa 95°C aufgeschmolzen, geknetet und gezogen, bis ein geschmeidiger elastischer fadenziehender Käseteig sich gebildet hat, der einem Mozzarella-Frischkäse entspricht,
g) dann werden Formstücke wie Kugeln, Stangen, Zöpfe aus dem heißen Käseteig ausgeformt, wobei die Formstücke eine geschlossene Haut bilden und
h) gegebenenfalls die noch warmen Formstücke in Gestalt von Kugeln anschließend in eine Preßform eingebracht werden in welcher sie zu Scheiben flachgedrückt werden, wobei die Haut auch bei den flachgedrückten Scheiben erhalten bleibt,
i) die noch warmen Formstücke oder flachgedrückten warmen Scheiben in einem salzlosen Wasserbad unterhalb Raumtemperatur kurzzeitig abgeschreckt werden und dann aus dem Wasserbad entfernt werden und
k) unmittelbar anschließend die abgeschreckten Formstücke oder Scheiben mittels eines flüssigen Kältemittels, wie flüssiger Kohlensäure oder flüssigem Stickstoff innerhalb weniger Sekunden auf eine Temperatur unterhalb -20°C tiefgekühlt und schockgefrostet werden und
I) die schockgefrosteten Formstücke oder Scheiben in gewünschte Gebinde verpackt werden.

Vorteilhafte Weiterbildungen des erfindungsgemäßen Verfahrens zum Herstellen von servierfähigen Stücken aus Mozzarella in schockgefrosteter Form, insbesondere in Form von Kugeln, Stangen, Zöpfen, Scheiben bzw. Minikugeln sind den kennzeichnenden Merkmalen der Verfahrensansprüche 2 bis 12 entnehmbar.

Die Aufgabe, lagerfähige servierfähige Stücke aus Mozzarella mit Herstellungsfrische zu schaffen, wird erfindungsgemäß durch schockgefrostete servierfähige Stücke aus Mozzarella gelöst, die aus einem Käseteig aus Kuh- oder Wasserbüffelmilch durch Formen und ggf. Pressen, die von einer Haut umgeben sind, hergestellt sind und wobei das aus dem Käseteig geformte Formstück vor dem Schockfrosten ausschließlich mit salzlosem Wasser behandelt wurde und bei einer Massetemperatur unterhalb -20°C im Frischezustand schockgefrostet wurden. Vorteilhafte Weiterbildungen der schockgefrosteten servierfähigen Stücke aus Mozzarella in lagerfähiger Form mit Konservierung des Frischezustandes sind den kennzeichnenden Merkmalen der Ansprüche 14 bis 20 sowie den nach dem Verfahren hergestellten schockgefrosteten Stücken aus Mozzarella entnehmbar.

Mit der Erfindung ist es möglich, Mozzarella im Frischezustand bis zu 1 Jahr im schockgefrosteten Zustand zu konservieren, ohne Verlust an Frische, Feuchtigkeitsgehalt und Konsistenz beim Auftauen der schockgefrosteten Stücke aus Mozzarella.

Ein wesentliches Merkmal der Erfindung besteht darin, daß die frische Mozzarella, die in Form von Formstücken aus dem durch Kneten und Ziehen erhaltenen Käseteig erhalten wird, sofort ausschließlich mit salzfreiem Wasser zum Abschrecken behandelt wird. Es wird bevorzugt ein Wasserbad mit einer Temperatur von 5 bis 10°C verwendet und die noch warmen Formstücke oder noch warmen Scheiben aus Mozzarella werden in dem Wasserbad während einer kurzen Zeitdauer von nur wenigen Minuten, vorzugsweise etwa 2 bis 7 Minuten abgeschreckt. Direkt anschließend nach dem Abschrecken und Abkühlen der Mozzarella-Formstücke bzw. geformten Scheiben werden dieselben mittels eines flüssigen Kältemittels, in welches sie eingetaucht werden innerhalb weniger Sekunden schockgefrostet, wobei die Temperatur der Mozzarella-Masse, d.h. der Kugeln oder Scheiben auf mindestens -20°C oder darunter vorzugsweise -25°C oder niedriger abgesenkt wird und eine Schockfrostung eintritt. Das zum Schockfrosten verwendete flüssige Kältemittel sollte eine Temperatur unterhalb -40°C aufweisen. Als flüssige Kältemittel kommen gegenüber Lebensmitteln, hier Mozzarella, inerte Stoffe in Frage, wie beispielsweise flüssiger Stickstoff oder flüssige Kohlensäure. Je nach Größe und Masse der Mozzarella-Stückchen wird eine Zeitdauer für die Schockfrostung von etwa 4 bis 10 Sekunden angewendet.

Für das erfindungsgemäße Verfahren werden Formstücke eingesetzt, die aus einem Käseteig, der einen definierten Aufschließungs- und Umwandlungsprozeß durchlaufen hat, hergestellt und die einen optimalen Frischezustand und Geschmack und Konsistenz aufweisen. Die Mozzarella wird in optimalem Frische- und Geschmackszustand schockgefrostet und in diesem Zustand, in dem sie eingefroren wurde, wieder aufgetaut, so daß sie nach dem Auftauen wieder ohne Einbußen vorliegt und beste Frische- und Geschmacks-Qualitäten und Konsistenz zu dem Zeitpunkt des Servierens vorliegen. Die schockgefrostete Mozzarella gemäß der Erfindung kann bis zu 1 Jahr gelagert werden und weist zum Zeitpunkt des Auftauens den konservierten Frischezustand auf, den sie zum Zeitpunkt der Herstellung und des Schockfrostens aufwies. Das Problem der frischen Mozzarella, die nach wenigen Tagen Lagerzeit in Salzlake an Qualität und Geschmack verliert, ist mit der Erfindung überwunden. Insbesondere kann die Lagerung in Salzlake oder salzhaltiger Form vermieden werden.

Erfindungsgemäß werden Stücke, wie kleine servierfähige Portionen in Form von Kugeln oder Scheiben aus Mozzarella in schockgefrosteter Form hergestellt, die nach dem Auftauen unmittelbar wieder in dem Frische- und Geschmackszustand und Konsistenz vorliegen, in denen sie schockgefrostet wurden. Die Frische und Qualität der Mozzarella zum Zeitpunkt des Schockgefrierens wird erfindungsgemäß konserviert und erstmalig ist frische Mozzarella auch nach einer Lagerzeit bis zu 1 Jahr ohne Salzlake und Geschmacks- und Frischeverlust erhältlich.

Eine mögliche Form tiefgefrorener Stücke aus Mozzarella sind kleine Kugeln - Mini-Kugeln - mit einem Gewicht von etwa 1 bis zu 2 g, die aus dem aufgeschmolzenen Käsebruch ausgeformt werden und die beispielsweise zum Aufstreuen auf Salate, zum Frischessen oder aber auch zum Aufstreuen auf Pizzen zum Backen geeignet sind.

Eine weitere vorteilhafte Ausgestaltung der erfindungsgemäßen Stücke aus Mozzarella sind größere Kugeln mit einem Gewicht von etwa 20 bis zu 30 g, die aus dem aufgeschmolzenen Käsebruch ausgeformt werden und durch Pressen - Flachdrücken - zu Scheiben geformt werden. Die Kugeln werden hierbei zu Scheiben mit bevorzugt einer Dicke von 4 bis 7 mm flachgedrückt, die dann in bekannter Weise nach dem Auftauen unmittelbar zum Verzehr geeignet sind und beispielsweise zu Salaten mit Tomaten etc. angerichtet werden.

Um die Frische und Qualität und auch eine gleichbleibende Qualität der schockartig tiefgefrorenen Stücke aus Mozzarella zu erreichen und sicherzustellen, wird das Verfahren so durchgeführt, daß die aus dem heißen aufgeschmolzenen Käsebruch - Käseteig - geformten Formstücke, wie Kugeln noch eine Temperatur von etwa 50 bis 70°C aufweisen. Das Abschrecken erfolgt in einem kalten salzlosen Wasserbad, das bevorzugt eine Temperatur unterhalb Raumtemperatur, bevorzugt unterhalb 10°C aufweist. Die abgeschreckten Formstücke bzw. aus den Kugeln geformten Scheiben werden unmittelbar nach dem Abschrecken beispielsweise auf einem Transportband durch ein flüssiges Bad eines inerten Kältemittels, das eine Temperatur unterhalb -40°C aufweisen sollte, bevorzugt eine Temperatur im Bereich zwischen -50 und -70°C in wenigen Sekunden, bevorzugt während etwa 4 bis 10 Sekunden gezogen. Nach dem erfolgten Schockfrosten werden die Formstücke oder Scheiben zu den gewünschten Gebinden verpackt.

Während bei frisch hergestellter und in Salzlake gelagerter Mozzarella zum Erhalt einer Frische und eines guten Geschmacks ein möglichst junger unreifer Mozzarella in den Handel kommt, ist es auch möglich, mit dem erfindungsgemäßen Verfahren einen aus einem länger einem Aufschließungs- und Umwandlungsprozeß unterworfenen Käsebruch hergestellten Mozzarella durch schockartiges Tiefgefrieren zu lagern. Eine solche Mozzarella entwickelt einen besonderen Geschmack, sie weist jedoch, je höher der Reifegrad ist, frisch hergestellt eine kürzere Lagerzeit auf, auch in Salzlake, so daß sie nur wenige Tage zum Verzehr geeignet ist. Erfindungsgemäß kann diese gewünschte geschmackliche Kombination von Frische und Reife einer Mozzarella durch Schockfrosten festgehalten und konserviert werden und dem Verbraucher mit dem Auftauen des Produktes unmittelbar tagesfrisch ohne Verlust an Geschmack und Frische auch nach längerer schockgefrosteter Lagerzeit geboten werden.

Es ist möglich, durch das erfindungsgemäße Verfahren des Schockfrostens Mozzarella mit definierter Frische, Feuchtigkeitsgehalt, Konsistenz und Geschmack zum Zeitpunkt des Schockfrostens mittels des Schockfrostens lagerfähig zu machen. Erfindungsgemäß werden die schockgefrosteten Stücke aus Mozzarella zum Verzehr aufgetaut und liegen in dem Frischezustand und Feuchtigkeitsgehalt und Konsistenz und Geschmack, den sie zum Zeitpunkt des Schockfrostens aufweisen, wieder vor.

Durch die Behandlung des Ausformens der Formstücke aus dem aufgeschmolzenen Käsebruch - Käseteig - bzw. nachfolgend Flachdrücken von Kugeln zu Scheiben, wobei etwas Feuchtigkeit herausgepreßt wird, erhält man Stücke, die eine definierte Zusammensetzung und Feuchtigkeitsgehalt aufweisen. Hierbei werden die zu Scheiben flachzudrückenden Kugeln besonders schonend behandelt, damit die Haut nicht zerstört wird. Hierfür wird erfindungsgemäß vorgeschlagen, die noch warmen Kugeln in eine auf etwa 60 bis 70°C erwärmte Preßform einzulegen und mit dieser flachzudrücken. Bei diesem Verfahren verlieren die Scheiben höchstens etwa 1 bis 3 Gew.-% ihrer Feuchtigkeit. Durch die Abkühlung in einem salzlosen Wasserbad in einer definierten kurzen Zeit von wenigen Minuten können die Stücke aus Mozzarella trotz der sie umgebenden Haut noch etwas Feuchtigkeit anlagern, die dann beim Schockfrosten das Austrocknen bzw. Verlieren von Feuchtigkeit verhindern, so daß die später zum unmittelbaren Verzehr aufgetauten Kugeln oder Scheiben aus Mozzarella genau die Konsistenz, Frische und Feuchtigkeit aufweisen wie eine frische junge Mozzarella unmittelbar nach ihrer Herstellung.

Die Herstellung der Mozzarella für die Weiterverarbeitung und Schockfrostung gemäß der Erfindung wird nach dem bekannten Herstellungsverfahren für das Herstellen von Käsebruch auf der Basis von Kuhmilch oder Büffelmilch, wobei Vollmilch eingesetzt wird und Fettgehalte in der Trockenmasse von mindestens 30% (Halbfett) bis zu 45% Fett oder mehr in der Trockenmasse übrig sind, aufgebaut.

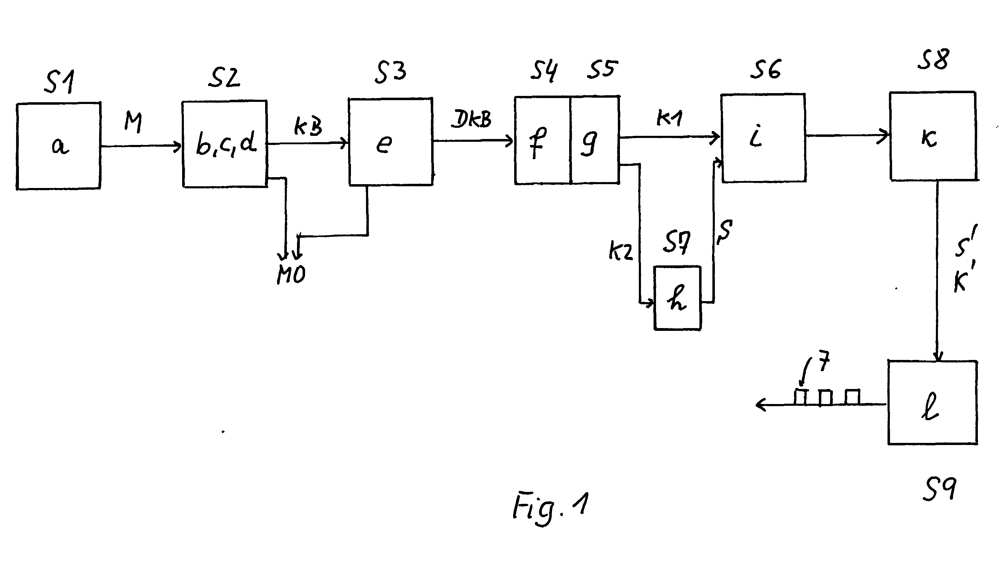

Das erfindungsgemäße Verfahren ist in der beigefügten Figur 1 schematisch dargestellt und wird anhand dessen näher erläutert.

Zuerst wird traditionell Mozzarella-Frischkäse hergestellt, wie in der Figur 1 schematisch dargestellt ist. Frisch angelieferte Vollmilch wird in der Station S1 gemäß Verfahrensschritt a pasteurisiert, beispielsweise bei Temperaturen über 70°C und anschließend die Milch M in den Fermenter gemäß Station S2 überführt, in dem sie gemäß Verfahrensschritt b auf 35°C erwärmt wird, hier gemäß Verfahrensschritt c das Lab und Säurerungsmittel, Zitronensäure, Kulturen zugegeben werden, wodurch die Gerinnung der Milch und das Eindicken derselben bewirkt wird und die Milcheiweißstoffe ausgefällt werden. Zum Schluß wird das ausgefällte Kasein - der Käsebruch KB - gemäß Verfahrensschritt d zerkleinert und die Molke MO abgezogen. Dann wird der Käsebruch KB gemäß Verfahrensschritt e zum weiteren Drainieren in die Station S3, in der sich ein Lochtrommel befindet, überführt, um weitere Molke MO aus dem Käsebruch zu entfernen. Nach dem Durchführen des Drainageschrittes e wird der drainierte Käsebruch DKB der Station S4 zugeführt, in welcher der Verfahrensschritt f, nämlich das Aufschmelzen, Kneten und Ziehen, bis der Käseteig mit Zustand der Mozzarella erreicht ist, durchgeführt wird. Dann werden mittels der Vorrichtung S5 die entsprechenden Formstücke, wie Kugel, Stange, Zopf aus dem aufgeschmolzenen Käsebruch - Käseteig - ausgeformt. Mittels einer Ausformeinrichtung S5 werden beispielsweise kleine Kugeln K1 aus dem aufgeschmolzenen Käsebruch oder große Kugeln K2 ausgeformt, Verfahrensschritt g. Die kleinen Kugeln K1 - Mini-Kugeln - werden unmittelbar von der Ausformeinrichtung S5 in ein kaltes salzloses Wasserbad S6 eingebracht, Verfahrensschritt i, beispielsweise mittels Transportband. Das Wasser hat beispielsweise eine Temperatur von 5°C. Die großen Kugeln K2 werden unmittelbar von den Ausformeinrichtungen S5 in eine Flachdrückeinrichtung S7 mit einer Preßform mit einer entsprechenden Zahl von Aufnahmen (Kavitäten) für die Kugeln K2 verbracht. Die Preßform wird hierbei auf eine Temperatur von 65°C vorgewärmt. Nach dem Flachdrücken - Verfahrensschritt h - der Kugeln K2 zu Scheiben S werden diese unmittelbar in das Wasserbad S6 zum Abschrecken verbracht. Nach wenigen Minuten Aufenthalt im Wasserbad, etwa 5 Minuten und Abschreckung werden die abgeschreckten Scheiben S bzw. die Mini-Kugeln K1 beispielsweise mittels eines Förderbandes zu der Tiefgefrieranlage S8 gefördert. Die Tiefgefrieranlage S8 weist beispielsweise ein Wannenbad mit flüssigem Stickstoff einer Temperatur von -60°C auf und die Scheiben bzw. Kugeln aus Mozzarella durchlaufen die Tiefgefrieranlage S8 in wenigen Sekunden, beispielsweise 5 Sekunden auf einem Transportband und werden dabei abgekühlt und schockgefrostet - Verfahrensschritt k. Die schockgefrosteten Produkte S' bzw. K1' werden dann in einer Verpackungsstation S9 zu den gewünschten Gebinden 7 verpackt - Verfahrensschritt I. Bei der Schockfrostung werden die Scheiben bzw. Kugeln in ihrer Masse auf mindestens -20°C, vorzugsweise mindestens -25°C gekühlt.

Die Gebinde 7 werden dann in tiefgekühlten Behältern und in tiefgekühlter Form gelagert und dem Verbraucher zugeführt.

Mit dem erfindungsgemäßen Verfahren des Schockfrostens und Konservierens von Mozzarella wird der Frischezustand, Feuchtigkeitsgehalt, Geschmack und Konsistenz des Mozzarella zum Zeitpunkt des Schockfrostens erhalten, d.h. konserviert und gleichzeitig wird durch das Schockfrosten ein weiterer Veränderungsprozeß der Mozzarella einschließlich des Austrocknens verhindert.

## Patentansprüche

1. Verfahren zum Herstellen von tiefgefrorenen Stücken aus Mozzarella-Frischkäse, die nach dem Auftauen servierfähig sind, umfassend folgende Verfahrensschritte:
a) Milch von Kühen oder Wasserbüffeln wird pasteurisiert,
b) die pasteurisierte Milch wird auf eine Temperatur im Bereich von 35°C gebracht,
c) der warmen pasteurisierten Milch wird tierisches Lab und/oder mikrobielles Lab und/oder Kulturen von Milchsäure produzierenden Bakterien, ggf. Säuerungsmittel, wie Zitronensäure zugegeben, infolge dessen gerinnt und dickt die Milch ein und bildet ein dickflüssiges Kasein (Milcheiweißstoffe) und dünnflüssige Molke, wobei das Kasein sich in der Molke absetzt, und
d) das in der Molke abgesetzte Kasein wird durch Schneiden zu Bruchstücken zerkleinert und durch Abtrennen der Molke Käsebruch erhalten,
e) anschließend wird der erhaltene Käsebruch drainiert,
f) danach wird der drainierte Käsebruch unmittelbar einem weiteren Verkäsungsprozeß zugeführt und in salzhaltigem heißem Wasser bei bis zu etwa 95°C aufgeschmolzen, geknetet und gezogen, bis ein geschmeidiger elastischer fadenziehender Käseteig sich gebildet hat, der einem Mozzarella-Frischkäse entspricht,
g) dann werden Formstücke wie Kugeln, Stangen, Zöpfe aus dem heißen Käseteig ausgeformt, wobei die Formstücke eine geschlossene Haut bilden und
h) gegebenenfalls die noch warmen Formstücke in Gestalt von Kugeln anschließend in eine Preßform eingebracht werden in welcher sie zu Scheiben flachgedrückt werden, wobei die Haut auch bei den flachgedrückten Scheiben erhalten bleibt,
i) die noch warmen Formstücke oder flachgedrückten warmen Scheiben in einem salzlosen Wasserbad unterhalb Raumtemperatur kurzzeitig abgeschreckt werden und dann aus dem Wasserbad entfernt werden und
k) unmittelbar anschließend die abgeschreckten Formstücke oder Scheiben mittels eines flüssigen Kältemittels, wie flüssiger Kohlensäure oder flüssigem Stickstoff innerhalb weniger Sekunden auf eine Temperatur unterhalb -20°C tiefgekühlt und schockgefrostet werden und
I) die schockgefrosteten Formstücke oder Scheiben in gewünschte Gebinde verpackt werden.

2. Verfahren nach Anspruch 1, **dadurch gekennzeichnet, daß** die warmen Formstücke oder Scheiben in einem Wasserbad von + 5°C bis + 10°C während einer Dauer von 2 bis 7 Minuten abgeschreckt werden.

3. Verfahren nach einem der Ansprüche 1 oder 2, **dadurch gekennzeichnet, daß** die Formstücke oder Scheiben innerhalb von 4 bis 10 Sekunden schockgefrostet werden.

4. Verfahren nach einem der Ansprüche 1 bis 3, **dadurch gekennzeichnet, daß** das flüssige Kältemittel eine Temperatur unterhalb -40°C aufweist.

5. Verfahren nach einem der Ansprüche 1 bis 4, **dadurch gekennzeichnet, daß** die noch warmen Kugeln in eine auf 60 bis 70°C erwärmte Preßform eingelegt und mittels dieser zu Scheiben flachgedrückt werden.

6. Verfahren nach einem der Ansprüche 1 bis 4, **dadurch gekennzeichnet, daß** kleine Kugeln mit einem Gewicht von etwa 1 g aus dem heißen Käseteig ausgeformt werden.

7. Verfahren nach einem der Ansprüche 1 bis 5, **dadurch gekennzeichnet, daß** große Kugeln mit einem Gewicht von 20 bis 30 g zum Herstellen von Scheiben aus dem heißen Käseteig ausgeformt werden und die Kugeln zu Scheiben einer Dicke von 4 bis 7 mm flachgepreßt werden.

8. Verfahren nach Anspruch 1, **dadurch gekennzeichnet, daß** die aus dem heißen Käseteig ausgeformten Formstücke eine Temperatur von 50 bis 70°C aufweisen.

9. Verfahren nach Anspruch 1, **dadurch gekennzeichnet, daß** beim Flachdrücken der Kugeln zu Scheiben eine geringe Menge Feuchtigkeit herausgepreßt wird.

10. Verfahren nach einem der Ansprüche 1 bis 9, **dadurch gekennzeichnet, daß** die Formstücke oder Scheiben auf einem Transportband durch ein Wasserbad gezogen und abgeschreckt werden und unmittelbar nach Verlassen des Wasserbades mit dem Transportband durch ein flüssiges Bad aus einem inerten Kältemittel bei Temperaturen unterhalb -40°C für eine Zeitdauer von höchstens bis zu 10 Sekunden gezogen und dabei schockgefrostet werden.

11. Verfahren nach einem der Ansprüche 1 bis 10, **dadurch gekennzeichnet, daß** der Käsebruch beim kontinuierlichen Durchlauf durch eine Lochtrommel auf eine Trockenmasse von 35 bis 46%, insbesondere 36 bis 42% drainiert wird.

12. Verfahren nach einem der Ansprüche 1 bis 11, **dadurch gekennzeichnet, daß** die schockgefrosteten Formstücke oder Scheiben aus Mozzarella zum Verzehr aufgetaut werden, wobei sie in dem Frischezustand und mit dem Feuchtigkeitsgehalt, den sie zum Zeitpunkt des Schockfrostens aufweisen und der dem Zustand einer frisch hergestellten Mozzarella entspricht, vorliegen.

13. Schockgefrostete servierfähige Stücke aus Mozzarella hergestellt aus einem Käsebruch aus Kuh- oder Wasserbüffelmilch durch Formen und ggf. Pressen, die von einer Haut umgeben sind und wobei das aus dem aufgeschmolzenen und gezogenen Käsebruch geformte Formstück vor dem Schockfrosten ausschließlich mit salzlosem Wasser behandelt wurde und bei einer Massetemperatur unterhalb -20°C im Frischezustand der Mozzarella schockgefrostet wurde.

14. Schockgefrostete servierfähige Stücke aus Mozzarella gemäß Anspruch 13, **dadurch gekennzeichnet, daß** sie die Form einer Scheibe mit einem Gewicht von 20 bis 30 g und einer Dicke von 4 bis 7 mm aufweisen.

15. Schockgefrostete servierfähige Stücke aus Mozzarella gemäß Anspruch 13, **dadurch gekennzeichnet, daß** sie kugelförmig bis tropfenförmig gestaltet sind und ein Gewicht von etwa 1 bis 2 g aufweisen.

16. Schockgefrostete servierfähige Stücke aus Mozzarella gemäß einem der Ansprüche 13 bis 15, **gekennzeichnet durch** eine Fertigung aus einem Käsebruch aus Kuh- oder Wasserbüffelmilch, der in heißem Wasser bei Temperaturen bis zu 90°C geknetet und gezogen wurde, bis er einen fadenziehenden elastischen weichen Käseteig gebildet hat,
und Formstücke, wie Kugeln, Stangen, Zöpfe aus dem heißen Käseteig ausgeformt wurden, wobei die Formstücke eine geschlossene Haut ausbilden und
gegebenenfalls die noch warmen Kugeln anschließend in eine Preßform eingebracht wurden, in welcher sie zu Scheiben flachgedrückt wurden, wobei die Haut auch bei den flachgedrückten Scheiben erhalten blieb,
die noch warmen Formstücke oder flachgedrückten Scheiben in einem salzlosen Wasserbad unterhalb Raumtemperatur kurzzeitig abgeschreckt und aus dem Wasserbad entfernt wurden und
unmittelbar anschließend die abgeschreckten Formstücke oder Scheiben mittels eines flüssigen Kältemittels, wie flüssiger Kohlensäure oder flüssigem Stickstoff innerhalb weniger Sekunden auf eine Temperatur unterhalb -20°C tiefgekühlt und schockgefrostet wurden.

17. Schockgefrostete servierfähige Stücke aus Mozzarella nach einem der Ansprüche 14 bis 17, **dadurch gekennzeichnet, daß** die aus dem Käseteig ausgeformten Formstücke eine Temperatur von 50 bis 70°C aufweisen und in einem Wasserbad von +5°C bis +10°C während einer Dauer von 2 bis 7 Minuten abgeschreckt wurden.

18. Schockgefrostete servierfähige Stücke aus Mozzarella nach einem der Ansprüche 13 bis 17, **dadurch gekennzeichnet, daß** die Formstücke oder Scheiben innerhalb von 4 bis 10 Sekunden durch Eintauchen in ein flüssiges Kältemittel mit einer Temperatur unterhalb -40°C schockgefrostet wurden.

19. Schockgefrostete servierfähige Stücke aus Mozzarella nach Anspruch 16, **dadurch gekennzeichnet, daß** die noch warmen Kugeln mittels einer auf 60 bis 70°C erwärmten Preßform zu Schreiben flachgedrückt wurden.

## Claims

1. A method for making deep-frozen pieces of mozzarella cheese, which after defrosting, are ready to be served, including the following method steps:
a) milk from cows or water buffalos is pasteurized;
b) the pasteurized milk is brought to a temperature in the range of 35 °C;
c) the warm pasteurized milk is added to an animal lab and/or microbial lab and/or cultures of bacteria produced from lactic acid, and if necessary, an acidification agent, such as citric acid, wherein as a result of this, the milk is clotted and thickened and forms a viscous casein (milk white material) and low-viscosity whey, whereby the casein is precipitated in the whey; and
d) the casein precipitated in the whey is broken down to fragments by cutting and by separating of the whey, curd is obtained;
e) subsequently, the obtained curd is drained;
f) thereafter, the drained curd is supplied directly into a further cheese-making process and in hot water containing salt, is melted up to approximately 95 °C, kneaded, and drawn, until a flexible, elastic, ropy, cheese dough is formed, which corresponds to a fresh mozzarella cheese;
g) then, shapes such as balls, bars, braids, are formed out of the hot cheese dough, wherein the shapes form a closed skin; and
h) if necessary, the still-warm shapes in the form of balls are placed into a press form in which they are pressed flat into disks, wherein the skin is also maintained with the flatly pressed disks;
i) the still-warm shapes or flatly pressed warm disks are quenched in a salt-free water bath beneath room temperature for a short time and then are removed from the water bath; and
j) directly following, the quenched shapes or disks are deep-cooled to a temperature below -20 °C and shock-frozen by means of a liquid cooling means, such as liquid carbonic acid or liquid nitrogen; and
k) the shock-frozen shapes or disks are packed in desired containers.

2. The method according to claim 1, **characterized in that** the warm shapes or disks are quenched in a water bath of +5 °C to +10 °C during a time period of 2 to 7 minutes.

3. The method according to one of claims 1 or 2, **characterized in that** the shapes or disks are shock-frozen within 4 to 10 seconds.

4. The method according to one of claims 1 through 3, **characterized in that** the liquid cooling means has a temperature below -40 °C.

5. The method according to one of claims 1 through 4, **characterized in that** the still warm balls are placed in a pressing mold heated to 60 to 70 °C and are flatly pressed by means of this into disks.

6. The method according to one of claims 1 through 4, **characterized in that** the small balls are formed out of the hot cheese dough with a weight of approximately 1 g.

7. The method according to one of claims 1 through 5, **characterized in that** the large balls are formed from the hot cheese dough with a weight of 20 to 30 g for making disks and the balls are flatly pressed into disks having a thickness of 4 to 7 mm.

8. The method according to claim 1, **characterized in that** the shapes formed from the hot cheese dough have a temperature of 50 to 70 °C.

9. The method according to claim 1, **characterized in that** with flat-pressing of the balls into disks, a minimal amount of moisture is pressed out.

10. The method according to one of claims 1 through 9, **characterized in that** the shapes or disks are drawn through a water bath onto a conveyor and are quenched and directly after leaving the water bath with the conveyor are drawn through a liquid bath of an inert cooling means having temperatures below -40 °C for a time period of 10 seconds at the most and thereby shock-frozen.

11. The method according to one of claims 1 through 10, **characterized in that** the curd is drained with a continual flow path by means of a perforated drum to a dry mass of 35 to 46%, in particular, 36 to 42%.

12. The method according to one of claims 1 through 11, **characterized in that** the shock-frozen shapes or disks of mozzarella are defrosted for consumption, wherein they are available in a fresh state and with the moisture content, which they have at the time-point of the shock-freezing and which corresponds to the condition of a freshly made mozzarella.

13. A shock-frozen, ready-to-serve pieces of mozzarella made from a curd of cow or water buffalo milk by shaping and, if necessary, pressing, which are surrounded by a skin and wherein the shapes formed from the melted and drawn curd are treated with a salt-free water before the shock-freezing and are shock-frozen with a mass temperature below -20 °C into the fresh state of mozzarella.

14. The shock-frozen, ready-to-serve pieces of mozzarella according to claim 13, **characterized in that** they have the shape of a disk with a weight of 20 to 30 g and a thickness of 4 to 7 mm.

15. The shock-frozen, ready-to-serve pieces of mozzarella according to claim 13, **characterized in that** they are formed as ball-shaped to drop-shaped and have a weight of approximately 1 to 2 g.

16. The shock-frozen, ready-to-serve pieces of mozzarella according to one of claims 13 through 15, **characterized by** a preparation from a cure of cow or water buffalo milk, which is kneaded in hot water at temperatures up to 90 °C and drawn, until it has formed a ropy, elastic, soft cheese dough,
and shapes, such as balls, bars, braids are formed from the hot cheese dough, whereby the shapes form a closed skin and
if necessary, the still warm balls are applied subsequently into a pressing mold, in which they are flatly pressed into disks, whereby the skin also remains with the flatly-pressed disks,
the still warm pieces or flatly-pressed disks are quenched in a salt-free water bath beneath room temperature for a short time and are removed from the water bath and
directly subsequently, the quenched shapes or disks are deep-cooled to a temperature below -20 °C and shock-frozen by means of a liquid cooling means, such as liquid carbolic acid or liquid nitrogen within a few seconds.

17. The shock-frozen, ready-to-serve pieces of mozzarella according to one of claims 14 through 17, **characterized in that** they shapes formed from the cheese dough have a temperature of 50 to 70 °C and are quenched in a water bath of +5 °C to +10 °C during a time period of 2 to 7 minutes.

18. The shock-frozen, ready-to-serve pieces of mozzarella according to one of claims 13 through 17, **characterized in that** the shapes or disks are shock-frozen within 4 to 10 seconds by submersion into a liquid cooling means with a temperature below -40 °C.

19. The shock-frozen, ready-to-serve pieces of mozzarella according to claim 16, **characterized in that** the still warm balls are flatly pressed into disks by means of a pressing mold heated to a temperature of 60 to 70 °C.

## Revendications

1. Procédé pour la préparation de pièces de mozzarella fraîche congelées qui sont prêtes à servir après la décongélation, comprenant les étapes de procédé suivantes :
a) on pasteurise du lait de vaches ou bufflonnes,
b) le lait pasteurisé est porté à une température de l'ordre de 35 °C,
c) on ajoute au lait pasteurisé chaud des bactéries, de la présure animale et/ou de la présure microbienne et/ou des cultures de bactéries produisant de l'acide lactique, éventuellement des acidifiants, comme de l'acide citrique, à la suite de quoi le lait coagule et s'épaissit et forme une caséine consistante (albumines de lait) et du petit-lait à écoulement fluide, la caséine se déposant dans le petit-lait, et
d) la caséine déposée dans le petit-lait est décomposée en fractions en la tranchant, et on obtient de la fraction de fromage par séparation du petit-lait,
e) on draine ensuite la fraction de fromage obtenue,
f) on amène ensuite la fraction de fromage drainée immédiatement à un autre processus de caséification et on la fond dans de l'eau chaude salée jusqu'à environ 95 °C, on la pétrit et on l'étire, jusqu'à ce que ce soit formée une pâte de fromage élastique souple produisant des fils, correspondant à une mozzarella fraîche,
g) on forme ensuite des pièces moulées comme des boules, rouleaux, tresses à partir de la pâte de fromage chaude, les pièces moulées formant une peau fermée, et
h) éventuellement les pièces moulées encore chaudes en forme de boules sont ensuite apportées dans une forme de pressage dans laquelle elles sont aplaties pour former des tranches, la peau restant conservée même dans les tranches aplaties,
i) les pièces moulées encore chaudes ou tranches chaudes aplaties sont refroidies rapidement dans un bain d'eau non salé en dessous de la température ambiante, puis enlevées du bain d'eau, et
j) immédiatement à la suite, les pièces moulées ou tranches refroidies sont congelées en quelques secondes jusqu'à une température inférieure à - 20 °C au moyen d'un agent de refroidissement liquide, tel que de l'anhydride carbonique liquide ou de l'azote liquide, et congelées rapidement,
k) les pièces moulées ou tranches congelées rapidement sont emballées dans des récipients voulus.

2. Procédé selon la revendication 1, **caractérisé en ce que** les pièces moulées ou tranches chaudes sont refroidies dans un bain d'eau de +5 °C à +10 °C pendant 2 à 7 minutes.

3. Procédé selon l'une des revendications 1 ou 2, **caractérisé en ce que** les pièces moulées ou tranches sont refroidies rapidement en l'espace de 4 à 10 secondes.

4. Procédé selon l'une des revendications 1 à 3, **caractérisé en ce que** l'agent de refroidissement liquide présente une température inférieure à -40 °C.

5. Procédé selon l'une des revendications 1 à 4, **caractérisé en ce que** les boules encore chaudes sont déposées dans une forme de pressage chauffée à 60 à 70 °C, et aplaties en tranches au moyen de celle-ci.

6. Procédé selon l'une des revendications 1 à 4, **caractérisé en ce que** de petites boules d'un poids d'environ 1 g sont formées à partir de la pâte de fromage chaude.

7. Procédé selon l'une des revendications 1 à 5, **caractérisé en ce que** de grosses boules d'un poids de 20 à 30 g sont formées au départ de la pâte de fromage chaude pour produire des tranches, et les boules sont aplaties en tranches d'une épaisseur de 4 à 7 mm.

8. Procédé selon la revendication 1, **caractérisé en ce que** les pièces moulées formées à partir de la pâte de fromage chaude présentent une température de 50 à 70 °C.

9. Procédé selon la revendication 1, **caractérisé en ce qu'**en aplatissant les boules en tranches, une faible quantité d'eau est exprimée.

10. Procédé selon l'une des revendications 1 à 9, **caractérisé en ce que** les pièces moulées ou tranches sont tirées sur une bande transporteuse à travers un bain d'eau, et refroidies, et immédiatement après la sortie du bain d'eau, elles sont tirées à travers un bain liquide d'un agent de refroidissement inerte à des températures inférieures à -40 °C, pendant maximum 10 secondes et ainsi refroidies rapidement.

11. Procédé selon l'une des revendications 1 à 10, **caractérisé en ce que** la fraction de fromage est drainé lors du passage continu dans un tambour perforé jusqu'à une masse sèche de 35 à 46 %, en particulier de 36 à 42 %.

12. Procédé selon l'une des revendications 1 à 11, **caractérisé en ce que** les pièces moulées ou tranches de mozzarella fraîche refroidies rapidement sont décongelées en vue de leur consommation, se présentant dans l'état de fraîcheur et avec la teneur en humidité qu'elles présentent au moment du refroidissement rapide, et qui correspond à l'état d'une mozzarella fraîche fraîchement préparée.

13. Pièces de mozzarella fraîche refroidies rapidement et prêtes à servir, préparées au départ d'une fraction de fromage de lait de vache ou de bufflonne par formage et éventuellement pressage, qui sont enveloppées d'une peau, la pièce moulée formée à partir de la fraction de fromage fondue et étiré ayant été traité avant le refroidissement rapide exclusivement avec de l'eau non salée et refroidie rapidement à une température de masse inférieure à -20 °C à l'état frais de la mozzarella fraîche.

14. Pièces de mozzarella fraîche refroidies rapidement et prêtes à servir selon la revendication 13, **caractérisées en ce qu'**elles présentent la forme d'une tranche d'un poids de 20 à 30 g et d'une épaisseur de 4 à 7 mm.

15. Pièces de mozzarella fraîche refroidies rapidement et prêtes à servir selon la revendication 13, **caractérisées en ce qu'**elles se présentent sous une forme allant de celle de boules à celle de gouttes, et présentent un poids de 1 à 2 g environ.

16. Pièces de mozzarella fraîche refroidies rapidement et prêtes à servir selon l'une des revendications 13 à 15, **caractérisées par** une préparation à base d'une fraction de fromage de lait de vache ou de bufflonne, qui a été pétrie et étirée dans de l'eau chaude à des températures allant jusque 90 °C, jusqu'à ce qu'elle ait formé une pâte de fromage tendre et élastique formant des fils,
et des pièces moulées telles que boules, rouleaux, tresses aient été formées à partir de la pâte de fromage chaude, les pièces moulées formant une peau fermée, et
éventuellement, les boules encore chaudes aient ensuite été introduites dans une forme de pressage dans laquelle elles ont été aplaties en tranches, la peau restant conservée même dans les tranches aplaties,
les pièces moulées ou tranches aplaties encore chaudes aient été refroidies rapidement dans un bain d'eau non salée en dessous de la température ambiante et enlevées du bain d'eau,
immédiatement à la suite, les pièces moulées ou tranches refroidies sont congelées et refroidies rapidement en l'espace de quelques secondes à une température inférieure à -20 °C au moyen d'un agent de refroidissement tel que de l'anhydride carbonique liquide ou de l'azote liquide.

17. Pièces de mozzarella fraîche congelées rapidement et prêtes à servir selon l'une des revendications 14 à 17, **caractérisées en ce que** les pièces moulées formées à partir de la pâte de fromage présentent une température de 50 à 70 °C et ont été refroidies dans un bain d'eau de +5 °C à +10 °C pendant 2 à 7 minutes.

18. Pièces de mozzarella fraîche congelées rapidement et prêtes à servir selon l'une des revendications 13 à 17, **caractérisées en ce que** les pièces moulées ou tranches ont été congelées rapidement en l'espace de 4 à 10 secondes en les plongeant dans un agent de refroidissement liquide à une température inférieure à -40 °C.

19. Pièces de mozzarella fraîche congelées rapidement et prêtes à servir selon la revendication 16, **caractérisées en ce que** les boules encore chaudes ont été aplaties en tranches au moyen d'une forme de pressage chauffée à 60-70 °C.
